# EUROPÄISCHE PATENTSCHRIFT

(11) **EP 1 028 919 B1**
(45) Veröffentlichungstag und Bekanntmachung des Hinweises auf die Patenterteilung: **24.07.2002**
(21) Anmeldenummer: 98962228.7
(22) Anmeldetag: 10.11.1998
(51) Int. Cl.: C02F 11/12, C02F 11/14, B01D 33/04, B01D 35/31, B01D 37/03

(54) **VORRICHTUNG ZUR EINDICKUNG VON FLÜSSIGKEITEN ODER SCHLÄMMEN**
DEVICE FOR THICKENING LIQUIDS OR SLUDGES
DISPOSITIF SERVANT A EPAISSIR DES LIQUIDES OU DES BOUES

(30) Priorität: 11.11.1997 DE 19749757
(43) Veröffentlichungstag der Anmeldung: 23.08.2000
(73) Patentinhaber: Gebr. Bellmer GmbH + Co KG Maschinenfabrik, 75223 Niefern-Öschelbronn (DE)
(72) Erfinder: KOLLMAR, Ulrich, D-75181 Pforzheim (DE); MITSCHELE, Georg, D-75181 Pforzheim (DE); KLABUSCHNIG, Josef, D-75242 Neuhausen (DE); KUHN, Klaus, D-75449 Wurmberg (DE); UNGER, Lutz, D-75245 Neulingen (DE)
(74) Vertreter: Frank, Gerhard, Dipl.-Phys.
(86) Internationale Anmeldenummer: DE9803269
(87) Internationale Veröffentlichungsnummer: WO9924371

(56) Entgegenhaltungen:
- GB-A- 2 069 858
- US-A- 2 044 214
- US-A- 2 529 882
- PATENT ABSTRACTS OF JAPAN vol. 009, no. 300 (M-433), 27. November 1985 & JP 60 137600 A (ISHIGAKI KIKOU KK), 22. Juli 1985
- PATENT ABSTRACTS OF JAPAN vol. 011, no. 176 (C-426), 5. Juni 1987 & JP 62 001422 A (KUBOTA LTD), 7. Januar 1987

## Beschreibung

### Technisches Gebiet

Die Erfindung betrifft eine Vorrichtung gemäß dem Oberbegriff des Patentanspruchs 1.

Ein bevorzugter Anwendungsbereich solcher Vorrichtungen ist die Eindickung von Dünnschlämmen, d.h. der Flüssigkeitsentzug aus solchen Dünnschlämmen, so dass am Ausgang der Vorrichtung dann ein Dickschlammabwurf erfolgen kann, wobei das beim Ablauf des Verfahrens anfallende Schmutzwasser/Filtrat abgeführt wird. Wegen des Transportbandes wird eine solche Vorrichtung auch in der Regel als "Bandeindicker" bezeichnet.

### Stand der Technik

Bisher ist es üblich, die einzelnen Verfahrensstufen (Zugabe des Polyelektrolyten zur Flockung, Durchwandern einer Reifestrecke zur Wirkung des Polyelektrolyten, Aufgabe auf den Bandeindicker usw.) in separaten Baueinheiten durchführen zu lassen, die mehr oder weniger umständlich miteinander über Rohrleitungen und Verbindungsteile gekoppelt werden müssen, um einen einwandfreien Ablauf dieser Verfahrensschritte zu gewährleisten.

Diese konventionellen Lösungen sind auch sehr platzraubend und infolgedessen auch umständlich bei der Realisierung beim Endabnehmer, Änderungen im Verfahrensablauf (z.B. bei erforderlichen Änderungen der Reifezeiten bei unterschiedlichen Schlammkonsistenzen) können nur entsprechend aufwendig vorgenommen werden, entsprechendes gilt natürlich für Inspektionen, Wartung und Reparaturen.

Aus der GB-A-2 069 858 ist eine Bandfilterpresse bekannt, bei der die beschriebenen Abläufe als Vorstufe eines Pressvorgangs integriert sind. Zur Eindickung dient hierbei ein Mischschnecke zur Vermischung des zu entwässernden Schlammes mit einem Flockungshilfsmittel, in der Regel einem Polyelektrolyten, von der das Gemisch auf das untere Filterband der Presse aufgegeben wird, wo abhängig von der Fördergeschwindigkeit des Filterbandes die Vorentwässerung und damit Eindickung erfolgt.

Auch bei der vorbekannten Vorrichtung liegen die oben genannten Nachteile vor, was bei der Vielzahl der zu einer Entwässerung im Gegensatz zu einer Eindickung erforderlichen zusätzlichen Bauteile nicht verwunderlich ist. Eine bauliche Vereinfachung des den Gegenstand der Erfindung ausschließlich betreffenden Eindickungsbereichs ist dieser Druckschrift nicht entnehmbar.

### Darstellung der Erfindung

Es ist Aufgabe der Erfindung, eine Vorrichtung zur Eindickung von Flüssigkeiten oder Dickschlämmen konstruktiv einfacher, wartungs- und bedienungsfreundlicher und platzsparender auszubilden.

Erfindungsgemäß wird diese Aufgabe gemäß dem kennzeichnenden Teil des Patentanspruchs 1 gelöst.

Der grundlegende Gedanke der Erfindung ist somit in der gemeinsamen Wanne zu sehen, die sowohl statisch- mechanisch als auch funktionell die einzelnen Baueinheiten integriert und in ihrem Verfahrensablauf zusammenfasst.

Die grundlegende Wannenkonstruktion für alle wesentlichen funktionellen Bestandteile, insbesondere die Reifezeitkammer und das Transportband, erlaubt es, sämtliche Anschlüsse unmittelbar an der Wanne vorzusehen, z.B. durch geeignete Stutzen oder Flansche, insbesondere im unteren Wannenbereich oder unmittelbar auf der Wannenunterseite, wo diese Anschlüsse ohne zusätzliche Platzbeanspruchung und geschützt gegen äußere Einwirkungen sicher untergebracht werden können.

Das Wannenkonzept ermöglicht insbesondere auch im Bereich der Reifezeitkammer neue Lösungen, sei es, daß die gesamte Reifezeitkammer als modulartige Baueinheit einfach in die Wanne eingesetzt und fixiert wird, sei es, daß die Reifezeitkammer ihrerseits aus einfachen Bauteilen wie z.B. Führungsoder Leitblechen gebildet wird, die dann beispielsweise in verschiedenen Positionen einfach in ihrem zugeordneten Wannenabschnitt montiert und gehaltert und gegebenenfalls auch wieder leicht ausgetauscht werden können. Durch dieses Konzept ist eine extreme Wartungs- und Reparaturfreundlichkeit erreicht, insbesondere ist es aber auch möglich, den funktionellen Ablauf des Verfahrens durch eine Anpassung der Streckenlänge der Reifezeitkammer einfach durch Umorientierung und/oder Austausch geeigneter Führungs- und Leitbleche zu erreichen und somit eine Umrüstung der erfindungsgemäßen Vorrichtung auf verschiedenartige Polyelektrolyten- Dünnschlammgemische mit unterschiedlichen optimalen Reifezeiten zu ermöglichen.

Weitere vorteilhafte Ausgestaltungen sind den Unteransprüchen zu entnehmen.

### Kurze Beschreibung der Zeichnungen

Ein bevorzugtes Ausführungsbeispiel der erfindungsgemäßen Vorrichtung wird nun anhand von Zeichnungen näher erläutert, es zeigen:

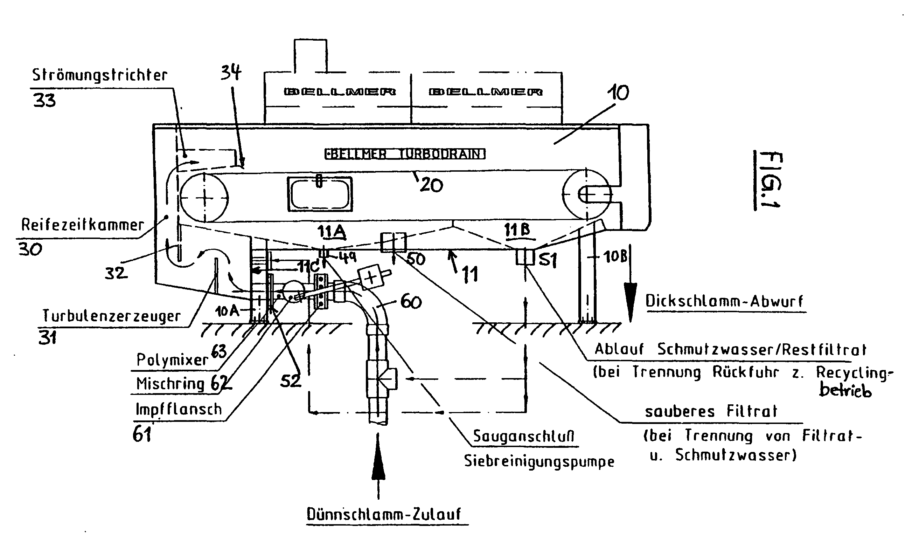

- Figur 1:: Eine Seitenansicht/Schnittdarstellung der Vorrichtung,

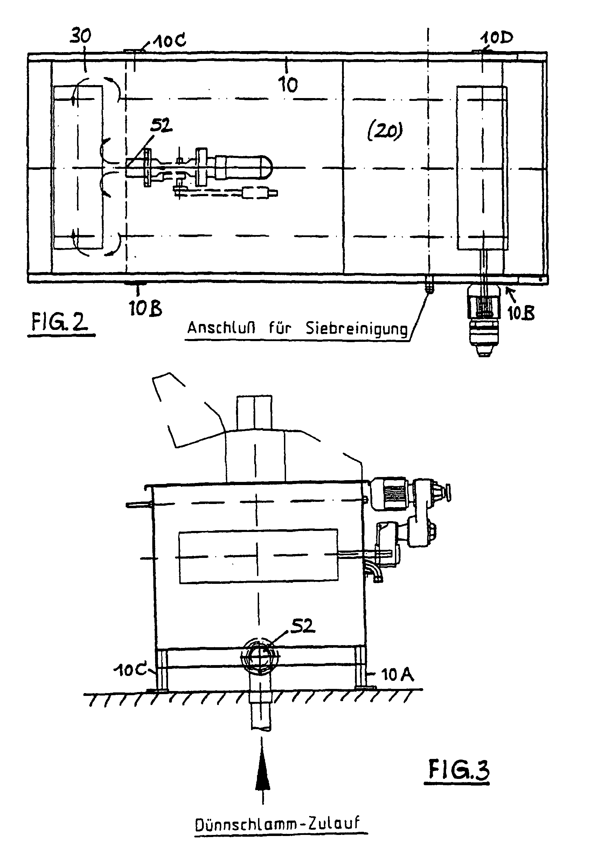

- Figur 2:: eine Unteransicht der Vorrichtung, und
- Figur 3:: eine Frontalansicht der Vorrichtung auf die in Figur 1 linke Stirnseite/Reifezeitkammer der Vorrichtung.

### Beschreibung eines bevorzugten Ausführungsbeispiels

Die in den Figuren dargestellte Vorrichtung besteht im wesentlichen aus einer Wanne 10, in der ein Transportband 20 gehalten ist, dem eine Reifezeitkammer 30 funktionell und räumlich vorgeschaltet ist. Sowohl das Transportband bzw. die beiden Walzen, als auch die Einrichtungen der Reifezeitkammer, die weiter unten noch erläutert werden, sind an der Innenseite dieser Wanne 10 befestigt, wobei bevorzupt eine schraubbare oder steckbare Befestigung vorgesehen ist, die einen leichten Austausch oder Zugang für Reparaturund/oder Wartungszwecke und auch eine leichte Umrüstung ermöglichen.

Die Wanne wird auf dem Boden abgestützt über Ständer 10A...10D. Die Unterseite 11 der Wanne 10 weist einen vertikalen Abschnitt 11C auf, der sich bis kurz oberhalb des Bodens erstreckt, so daß hier ein geschützter unterer Bereich unterhalb der Wanne 10 entsteht, der erfindungsgemäß bevorzugt als Anschlußbereich zur Zuführung und Abführung der funktionstypischen Flüssigkeiten oder Flüssigkeitsgemischen eingesetzt wird:

Über eine Rohrleitung 60 wird der einzudickende Düunschlamm dem tiefsten Bereich des abgesenkten Abschnittes der Wanne 10 zugeführt, der die Reifezeitkammer 30 bildet. Über einen Impfflansch 61 mit Mischring 62 wird dem Dünnschlamm eine spezifische Menge eines Flockungsmittels, in der Regel eines Polyelektrolyten, in regelbarer Menge zugemischt und diese Mischung dann über einen Anschlußflansch 52 der Reifezeitkammer eingangsseitig zugegeben.

Die Reifezeitkammer selbst erstreckt sich im wesentlichen über die gesamte Breite der Wanne 10 und ist beim dargestellten Ausführungsbeispiel mit Führungs- und Leitblechen 31,32,33 so unterteilt, daß sich die für den ieweiligen Dünnschlamm und das jeweilig eingesetzte Flockungsmittel optimale Länge der Reifestrecke und damit der Reifezeit ergibt, wobei auch die Strömungsverhältnisse beeinflußt werden (Turbulenzerzeuger, Strömungstrichter). Diese Bauteile können entweder als Modul vorgefertigt sein (durch Austausch von Modulen kann die Länge der Reifestrecke verschieden vorgegeben werden), oder die einzelnen Führungs- und Leitbleche können separat in verschiedenen Positionen in der Wanne 10 fixiert werden.

Die Reifezeitkammer 30 endet im Aufgabebereich des Transportbandes 20, wo eine Auslauflippe 34 gebildet ist. Danach erfolgt die weitere Entwässerung über die Strecke des Transportbandes, wobei die anfallenden Flüssigkeiten zur Siebreinigung, Schmutzwasser oder Restfiltrat an geeigneten Anschlüssen 49,50,51 abgenommen wird. Die Anschlüsse 49 und 51 sind hierbei am Scheitel von trichterförmig ausgebildeten Abschnitten 11A, 11B der Wanne 10 vorgesehen. Nach Durchführung des Flüssigkeitsentzuges wird der gebildete Dickschlamm dann am Ende der Vorrichtung abgeworfen, beispielsweise auf ein Förderband oder auch fahrbare Behälter.

Die Wannenkonzeption ermöglicht es auch insbesondere, das Siebwaschwasser wieder in die Wanne zurückzufördem und den Abscheidegrad zu erhöhen, dadurch ist auch bei geringen Durchsätzen ein Fahren der Anlage ohne fremdes Zusatzwasser möglich.

## Patentansprüche

1. Vorrichtung zur Eindickung von Flüssigkeiten oder Dünnschlämmen durch Wasserentzug, mit einem Transportband, einer Reifezeitkammer und Einrichtungen zur Zufuhr der Flüssigkeit/des Schlamms und Zumischung eines Polyelektrolyten zur Flockung in der Reifezeitkammer, **dadurch gekennzeichnet, daß** zumindest das Transportband (20) und die Reifezeitkammer (30) in einer gemeinsamen Wanne (10) untergebracht sind, die somit als Rahmen zur Halterung und zur seitlichen und unteren Begrenzung dieser Bauteile dient, und an die die zum Betrieb erforderlichen Anschlüsse (49,...,52) geführt sind.

2. Vorrichtung nach Anspruch 1, **dadurch gekennzeichnet, daß** alle Anschlüsse (50,...) zum Betrieb auf der über Ständer (10A...10D) vom Boden beabstandeten Wannenunterseite (11) angeordnet sind.

3. Vorrichtung nach Anspruch 1, **dadurch gekennzeichnet, daß** das Transportband (20) und die Einrichtungen der Reifezeitkammer (30) als jeweils modulartige Baueinheit an der Innenseite der Wanne (10) gehalten sind.

4. Vorrichtung nach Anspruch 1, **dadurch gekennzeichnet, daß** die Wannenunterseite (11) in mindestens zwei trichterähnliche Bereiche (11A,B) aufgeteilt ist, in deren Scheitel Anschlußstutzen (50,51) vorgesehen sind.

5. Vorrichtung nach Anspruch 1, **dadurch gekennzeichnet, daß** die Wanne (10) im Bereich der Reifezeitkammer (30) einen tieferliegenden Abschnitt (12) mit einer vertikalen Wandung (11C) aufweist, an der sich ein Anschluß (52) für den mit Polyelektrolyt versehenen Dünnschlamm befindet.

6. Vorrichtung nach Anspruch 1, **dadurch gekennzeichnet, daß** in der Reifezeitkammer (30) Einrichtungen zur Beeinflussung der Flockungszeit vorgesehen sind, die eine variable Streckenlänge für den Dünnschlamm und damit eine einstellbare Reifezeit ermöglichen.

7. Vorrichtung nach Anspruch 6, **dadurch gekennzeichnet, daß** die Einrichtungen aus Führungs- und Leitblechen (31...) gebildet sind, die einen Strömungskanal in der Reifezeitkammer (30) vorgeben und die Strömungsverhältnisse abschnittweise definieren, z.B. zur Turbulenzerzeugung.

8. Vorrichtung nach Anspruch 3, **dadurch gekennzeichnet, daß** das Transportband (20) und die Einrichtungen der Reifezeitkammer (30) lösbar, insbesondere steckbar oder schraubbar auf der Wanneninnenseite gehalten sind.

## Claims

1. Apparatus for thickening liquids or thin slurries by the removal of water, said apparatus having a conveyor belt, a maturing chamber and means for supplying the liquid/the slurry and admixing a polyelectrolyte for the flocculation in the maturing chamber, **characterised in that** at least the conveyor belt (20) and the maturing chamber (30) are accommodated in a common tank (10), which therefore serves as the frame for retaining said component parts and for the lateral and lower boundary for said parts, and to which tank the connections (49,...,52), which are required for the operation, extend.

2. Apparatus according to claim 1, **characterised in that** all of the connections (50,...) for the operation are disposed on the tank underside (11), which is spaced from the ground via support structures (10A...10D).

3. Apparatus according to claim 1, **characterised in that** the conveyor belt (20) and the means of the maturing chamber (30) are retained on the inside of the tank (10) as a respective modular structural unit.

4. Apparatus according to claim 1, **characterised in that** the tank underside (11) is divided into at least two funnel-like regions (11A,B), pipe connections (50,51) being provided in the angle point thereof.

5. Apparatus according to claim 1, **characterised in that** the tank (10) has, in the region of the maturing chamber (30), a lower-lying portion (12) with a vertical wall (11C), a connection (52) for the thin slurry, which is provided with polyelectrolyte, being situated on said wall.

6. Apparatus according to claim 1, **characterised in that** means for influencing the flocculation time are provided in the maturing chamber (30) and permit a variable linear length for the thin slurry and, hence, an adjustable maturing time.

7. Apparatus according to claim 6, **characterised in that** the means are formed from guide and baffle plates (31...), which provide a flow duct in the maturing chamber (30) and define the flow conditions in sections, e.g. to create turbulence.

8. Apparatus according to claim 3, **characterised in that** the conveyor belt (20) and the means of the maturing chamber (30) are retained on the inside of the tank in a detachable manner, more especially in a plug-in-type or screw-connectable manner.

## Revendications

1. Dispositif servant à épaissir des liquides ou des boues claires par déshydratation, comprenant une bande transporteuse, une chambre de maturation et des dispositifs pour l'arrivée du liquide/de la boue et l'addition d'un polyélectrolyte pour la floculation dans la chambre de maturation, **caractérisé en ce qu'**au moins la bande transporteuse (20) et la chambre de maturation (30) sont logées dans une cuve (10) commune, qui sert ainsi de châssis pour le maintien et la délimitation latérale et inférieure de ces composants, et sur laquelle sont guidés les raccords (49, ... , 52) requis pour le fonctionnement.

2. Dispositif suivant la revendication 1, **caractérisé en ce que** tous les raccords (50,...) pour le fonctionnement sont disposés sur le côté inférieur (11) de la cuve, distant du sol par l'intermédiaire de montants (10A...10D).

3. Dispositif suivant la revendication 1, **caractérisé en ce que** la bande transporteuse (20) et les dispositifs de la chambre de maturation (30) sont maintenus sur le côté intérieur de la cuve (10), à chaque fois sous la forme d'une unité modulaire.

4. Dispositif suivant la revendication 1, **caractérisé en ce que** le côté inférieur (11) de la cuve est subdivisé en au moins deux zones (11A, B) en forme d'entonnoir, au sommet desquelles sont prévues des tubulures de jonction (50, 51).

5. Dispositif suivant la revendication 1, **caractérisé en ce que** la cuve (10) présente dans la zone de la chambre de maturation (30) une section (12) plus basse avec une paroi verticale (11C), sur laquelle se situe un raccord (52) pour la boue claire munie du polyélectrolyte.

6. Dispositif suivant la revendication 1, **caractérisé en ce que** des dispositifs sont prévus dans la chambre de maturation (30) pour influer sur la durée de floculation, ces dispositifs permettant une longueur de parcours variable pour la boue claire, et ainsi une durée de maturation réglable.

7. Dispositif suivant la revendication 6, **caractérisé en ce que** les dispositifs sont formés de tôles de guidage et de chicane (31...), qui prédéfinissent un canal d'écoulement dans la chambre de maturation (30) et définissent par sections les conditions d'écoulement, par exemple pour générer la turbulence.

8. Dispositif suivant la revendication 3, **caractérisé en ce que** la bande transporteuse (20) et les dispositifs de la chambre de maturation (30) sont maintenus de façon amovible sur le côté intérieur de la cuve, peuvent être en particulier emmanchés ou vissés.
